Europäisches Patentamt

European Patent Office

Office européen des brevets

(19)

(11) Veröffentlichungsnummer: **0 320 458**
**A1**

(12) **EUROPÄISCHE PATENTANMELDUNG**

(21) Anmeldenummer: **88810839.6**

(22) Anmeldetag: **07.12.88**

(51) Int. Cl.4: **C 04 B 38/00**
C 04 B 41/87, F 01 N 3/02

(30) Priorität: **10.12.87 CH 4825/87**

(43) Veröffentlichungstag der Anmeldung:
**14.06.89 Patentblatt 89/24**

(84) Benannte Vertragsstaaten:
**AT BE CH DE ES FR GB GR IT LI LU NL SE**

(71) Anmelder: **SCHWEIZERISCHE ALUMINIUM AG**
**CH-3965 Chippis (CH)**

(72) Erfinder: **Frei, Olaf**
**Breiti 291**
**CH-8225 Siblingen (CH)**

**Frisch, Max**
**Neugrüthalde 21**
**CH-8222 Beringen (CH)**

**Bodmer, Viktor**
**Kirchbergstrasse 50**
**CH-8200 Schaffhausen (CH)**

**Mizrah, Tiberiu**
**Hohlenbaumstrasse 90**
**CH-8200 Schaffhausen (CH)**

(54) **Schaumkeramik für Filter zur Reinigung der Abgase von Dieselmotoren.**

(57) Bei bestimmten Betriebszuständen von Dieselmotoren weisen an sich effizient filternde, aus bekannter Schaumkeramik bestehende Dieselrussfilter keinen oder nur noch einen sehr niedrigen Partikelabscheidungsgrad auf, insbesondere bei hohen Abgastemperaturen und Abgasgeschwindigkeiten, das heisst vor allem dann, wenn die Dieselmotoren unter Volllast laufen.

Nach an sich bekannten Verfahren hergestellte Schaumkeramik für Filter zur Reinigung der Abgase von Dieselmotoren, bei der die Oberfläche aufgerauht wird, wobei der peak-zu peak-Abstand etwa 1 bis 100 μm, vorzugsweise 1 bis 10 μm, beträgt, weist diesen Nachteil nicht auf.

Eine solche Schaumkeramik wird hergestellt, indem die Aufrauhung der Oberfläche durch Abscheiden von anorganischen Stoffen und gegebenenfalls nachfolgender Zersetzung durch Temperaturbehandlung erfolgt.

EP 0 320 458 A1

Beschreibung

## Schaumkeramik für Filter zur Reinigung der Abgase von Dieselmotoren

Die Erfindung betrifft Schaumkeramik für Filter zur Reinigung der Abgase von Dieselmotoren.

Es hat sich bei bestimmten Betriebszuständen von Dieselmotoren gezeigt, dass an sich effizient filternde, aus Schaumkeramik bestehende Dieselrussfilter keinen oder nur noch einen sehr niedrigen Partikelabscheidungsgrad aufweisen. Dies geschieht insbesondere bei hohen Abgastemperaturen und Abgasgeschwindigkeiten, das heisst vor allem dann, wenn die Dieselmotoren unter Vollast laufen. Der ungenügende Partikelabscheidungsgrad wird auf eine zu niedrige Haftung der Russteilchen auf der Schaumkeramik zurückgeführt. Ein zu geringer Haftkoeffizient limitiert die Rückhaltewahrscheinlichkeit von Russ innerhalb der Schaumkeramik und es können sich daher keine Russagglomerate mehr bilden. Letztere sind aber zur Erzielung der Tiefenwirkungseffizienz derartiger Filter notwendig.

Angesichts dieser Gegebenheiten haben sich die Erfinder das Ziel gesetzt, die Filterwirkung bei einem Dieselrussfilter mit Schaumkeramik durch Erhöhung der Haftung der Russteilchen derart zu erhöhen, dass das Filter für alle Betriebszustände des Dieselmotors einen hohen Abscheidungsgrad aufweist, insbesondere auch im Bereich, wo ein sogenannter trockener Russ, dass heisst einer, der frei von adsorbierten Kohlenwasserstoffen ist, anfällt.

Aufgabe ist somit die Bereitstellung einer Schaumkeramik, die die Erreichung des Ziels bewirkt, und ein Verfahren zur Herstellung einer solchen Schaumkeramik anzugeben.

Die Kohlenwasserstoffe fördern üblicherweise das Anhaften des Russes innerhalb der porösen Schaumkeramikstruktur. Somit ist beim Fehlen oder bei unterdurchschnittlichen Gehalten von/an Kohlenwasserstoffen in den Abgasen auch die Abscheidungsrate der Russpartikel bei Verwendung von üblicher Schaumkeramik reduziert.

Erfindungsgemäss wird die gestellte Aufgabe durch eine Schaumkeramik gelöst, welche sich nach dem Wortlaut des Anspruchs 1 auszeichnet. Vorteilhafte Weiterbildungen der erfindungsgemässen Schaumkeramik sind durch die Merkmale der Ansprüche 2 und 3 gekennzeichnet.

Die Teilaufgabe bezüglich der Herstellung der erfindungsgemässen Schaumkeramik wird durch ein Verfahren gelöst, welches sich nach dem Wortlaut des Anspruchs 4 auszeichnet, und bevorzugte Weiterbildungen des erfindungsgemässen Verfahrens zeichnen sich durch die Merkmale der Ansprüche 5 bis 10 aus.

Die vorgenannten Aufgaben werden durch keramische Schaumfilterkörper gelöst, die so behandelt wurden, dass die äusseren Oberflächen eine relativ hohe Rauhigkeit, welche zum Festhalten von Abgaspartikeln von Dieselmotoren im gesamten Arbeitsbereich geeignet ist, aufweisen.

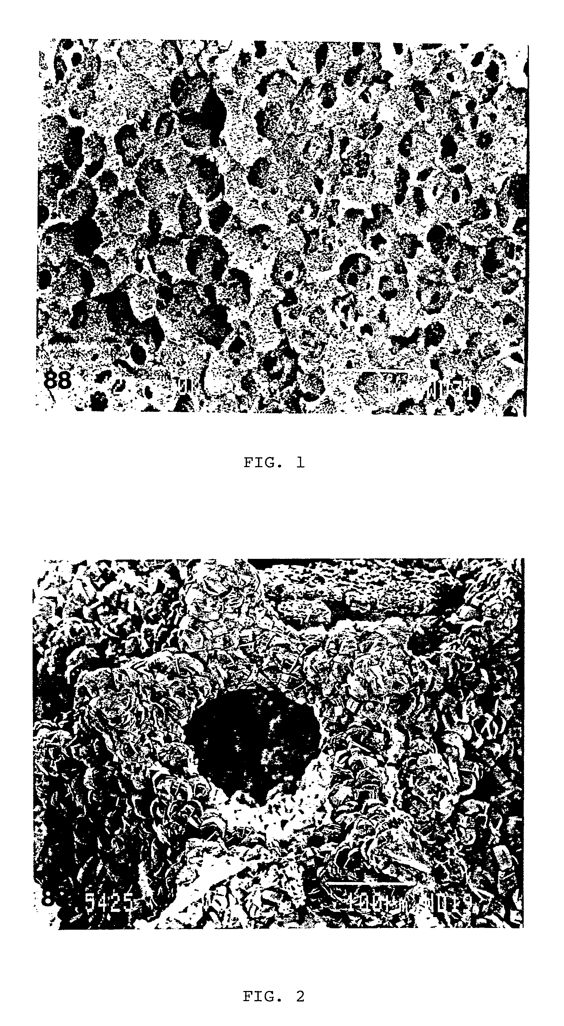

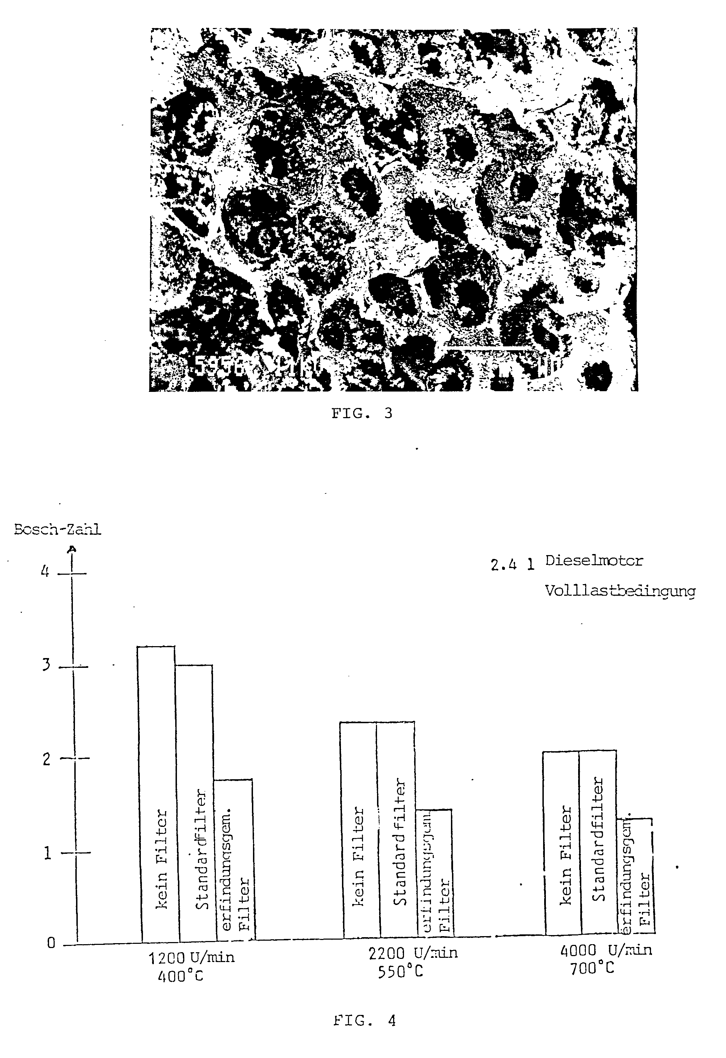

Figuren 1 und 2 zeigen eine aufgerauhte Filteroberfläche auf einem keramischen Schaumfilter gemäss Beispiel 1. Figur 3 zeigt eine aufgerauhte Filteroberfläche auf einem keramischen Schaumfilter gemäss Beispiel 2 und Figur 4 zeigt ein Diagramm mit verschiedenen keramischen Schaumfilterausbildungen bei unterschiedlichen Einsatzbedingungen.

Der unter der aufgerauhten Oberfläche liegende Schaumfilterkörper kann aus jedem konventionellem bekanntem keramischen Schaummaterial unter Anwendung irgendeiner geeigneten Herstellungsmethode aus dem Stand der Technik gefertigt werden. Beispielsweise kann der Filterkörper nach dem Verfahren, wie es in der US-Patentschrift 4 024 212 beschrieben ist, hergestellt werden. Vorzugsweise hat der Filterkörper eine Porosität im Bereich von 30-80 Poren pro linearem Zoll. Cordierit ist ein bevorzugtes Material für den Filterkörper, obwohl andere Keramikzusammensetzungen wie niedrige thermische Ausdehnungskoeffizienten aufweisende Materialien, z.B. Aluminiumtitanat, ebenfalls verwendet werden können.

Die Oberfläche(n) des Filterkörpers ist/sind durch die Ablagerung einer Schicht anorganischer Materialien aufgerauht und gegebenenfalls durch nachfolgende thermische Zersetzung der Materialien nachbehandelt. Beim Aufrauhen der Oberfläche(n) ist es zweckmässig, dass die auf jeder Oberfläche abgeschiedene Schicht eine Dicke im Bereich von etwa 10 µm bis etwa 200 µm aufweist und durch Partikel mit peak-Höhen von nicht mehr als 100 µm und vorzugsweise von nicht mehr als 50 µm gebildet wird. Es ist zweckmässig, dass das peak-Höhen-Intervall zwischen den Partikeln ungefähr 1 bis 100 µm, vorzugsweise ungefähr 1 bis 10 µm, beträgt, um sicher die gewöhnlich submikron vorliegenden Dieselabgaspartikel aufzufangen. Eine typische erfindungsgemässe abgeschiedene Schicht weist gegenüber dem darunterliegenden Filterkörper ein Gewichts/Volumen-Verhältnis im Bereich von ungefähr 50 mg/cm$^3$ bis 200 mg/cm$^3$ auf.

Obwohl jede gebräuchliche Ablagerungstechnik zur Anwendung kommen kann, um die aufgerauhte(n) Oberfläche(n) zu bilden, ist zur Bildung der erwünschten aufgerauhten Oberfläche(n) die Abscheidung aus übersättigten Lösungen besonders geeignet, z.B. eine Abscheidung aus einer 60° C warmen kaustischen Sodalösung von etwa 100 g $Na_2O/1$ bis etwa 170 g $Na_2O/1$, vorzugsweise von um 120 bis 130 g $Na_2O/1$ als NaOH mit etwa 110 g bis etwa 230 g $Al_2O_3/1$ in Form einer Aluminiumverbindung wie beispielsweise $Al(OH)_3$, vorzugsweise in einem molaren Verhältnis im Bereich von 1,20 bis 1,45 $Na_2O/Al_2O_3$.

Es hat sich jedoch auch der Einsatz von Mineralsäuren als Lösungsmittel besonders bewährt, insbesondere zur Abscheidung von Aluminiumsalzen.

Generell ist die Wahl des Lösungsmittels von den chemischen Eigenschaften des abzuscheidenden Stoffes abhängig. Das Lösungsmittel sollte vorteilhaft auf die zu beschichtende Schaumkeramik eine leicht ätzende Wirkung haben, um bei einem vorgängigen oder mit der Abscheidung gleichzeitigen Aetzvorgang diskrete Anwachsstellen freizulegen bzw. Kristallisationszentren zu bilden, damit die Dicke des abgeschiedenen Stoffes unregelmässig wird und zu der rauhen Oberfläche der erfindungsgemässen Schaumkeramik führt.

Wenn der Beschichtungsstoff Aluminiumhydroxid ist, sollte eine nachfolgende Temperaturbehandlung zur Anwendung kommen, um dasselbe in Aluminiumoxid in Form von nahezu wasserfreier Aktivtonerde oder Korund umzusetzen. Das abgeschiedene Material kann mit Wasser gewaschen und dann durch Behandlung über etwa 1 bis 5 Stunden bei Temperaturen von etwa 600 bis 1000° C, vorzugsweise von etwa 700 bis 800° C, umgesetzt bzw. zersetzt werden. Eine andere anwendbare Technik zur Oberflächenaufrauhung besteht in der Verwendung des CVD-(chemical vapour deposition-)Verfahrens. Als abgeschiedene Stoffe kommen $Si_3N_4$, SiC, TiC, Titanoxykarbid, $ZrO_2$ und insbesondere $Al_2O_3$ und TiN in Frage. Bei der Einstellung der Abscheidungsparameter muss darauf geachtet werden, dass die Gasgeschwindigkeit gross genug ist, um die abzuscheidende Substanz bis ins Innere der zu beschichtenden Schaumkeramik zu transportieren. Die Aufwachsgeschwindigkeit des abgeschiedenen Stoffes muss darüber hinaus so kontrolliert werden, dass sich eine möglichst homogene ortsunabhängige Beschichtung innerhalb der Schaumkeramikstruktur ergibt. Insbesondere muss das Zuwachsen der äusseren, an der Oberfläche der zu beschichtenden Schaum keramik liegenden Poren verhindert werden, da ansonsten ein Zutritt der Reaktionsgase ins Innere der Keramikstruktur verhindert werden würde.

### Beispiel 1

Es wurde ein nach an sich bekannten Verfahren hergestellter zylindrischer Schaumkeramikkörper aus Cordierit mit 50 Poren pro linearem Zoll mit einem Durchmesser von 142 mm und einer Höhe von 51 mm 12 Stunden in einer an $Al(OH)_3$ übersättigten NaOH-Lösung - molares Verhältnis $Na_2O$(kaustisch)/$Al_2O_3$ = 1,35 - bewegt. Die Temperatur wurde konstant bei 60° C gehalten.

Danach wurde der Keramikkörper mit Wasser abgespült und bei 700° C 3 Stunden kalziniert. Das Ergebnis zeigen Figuren 1 und 2 in Vergrösserung. Die Oberflächenschicht hatte eine Dicke von etwa 100 µm und bestand aus einer nahezu wasserfreien Aktivtonerde. Die die Abscheidungsschicht bildenden Partikel hatten eine peak-Höhe von etwa 30 µm und ein peak-zu-peak-Abstand von etwa 30 µm. Die Schicht hatte ein Gewichts-/Volumenverhältnis von 120 mg/cm³.

### Beispiel 2

In analoger Weise wie in Beispiel 1 wurde in 3 Stunden bei 700° C ein Schaumkeramikkörper hergestellt. Dieser Körper wurde als Filter in eine Abgasvorrichtung eingepackt und diese in die Abgasstromeinrichtung eines 2,4 l Dieselmotors installiert. Der Motor lief unter Dauervolllast bei 1200, 2200 und 4000 Umdrehungen pro Minute. Diese drei Geschwindigkeiten erzeugten verschiedene Abgastemperaturen, nämlich 400, 500 und 700° C. Unter jeder Versuchsbedingung wurden die Bosch-Zahlen gemessen, wobei hohe Bosch-Zahlen ein stark mit Russpartikeln befrachtetes Abgas und niedrige Bosch-Zahlen ein weitgehend partikelfreies Abgas anzeigen. Für Vergleichszwecke wurden die Tests ohne Filter und mit der gleichen Schaumkeramik aus Cordierit, jedoch ohne zu sätzliche Oberflächenbehandlung nach dem erfindungsgemässen Verfahren als Filter wiederholt.

Wie aus Figur ersichtlich ist, hat das erfindungsgemässe Filter unter jeder Versuchsbedingung eine niedrigere Bosch-Zahl, was eine sehr viel bessere Abgasreinigungswirkung gegenüber den Vergleichsfiltern bedeutet.

Es liegt somit nach der Erfindung ein Filter und ein Verfahren zur Herstellung desselben für die Reinigung von Abgasen von Dieselmotoren vor, welches die vorgenannten geforderten Zielsetzungen erfüllt und die ebenfalls genannten Vorteile aufweist.

Obwohl die Erfindung anhand spezifischer Ausführungsformen beschrieben wurde, ist es selbstverständlich, dass viele Alternativen, Modifikationen und Variationen im Lichte der vorherigen Beschreibung für den Fachmann naheliegend sind. Dementsprechend werden diese Alternativen, Modifikationen und Variationen als im Rahmen des Erfindungsgedankens liegend betrachtet und sollen ebenfalls unter den Schutzumfang der nachfolgenden Patentansprüche fallen.

### Patentansprüche

1. Schaumkeramik für Filter zur Reinigung der Abgase von Dieselmotoren, dadurch gekennzeichnet, dass die Oberfläche von nach an sich bekannten Verfahren hergestellter Schaumkeramik aufgerauht wird, wobei der peak-zu-peak-Abstand etwa 1 bis 100 µm, vorzugsweise 1 bis 10 µm, beträgt.

2. Schaumkeramik nach Anspruch 1, dadurch gekennzeichnet, dass die peak-Höhe maximal 100 µm, vorzugsweise maximal 50 µm, beträgt.

3. Schaumkeramik nach Anspruch 1 oder 2, dadurch gekennzeichnet, dass diese 30 bis 80 Poren je linearem Zoll aufweist.

4. Verfahren zur Herstellung einer Schaumkeramik nach einem der Ansprüche 1 bis 3, dadurch gekennzeichnet, dass die Aufrauhung der Oberfläche durch Abscheiden von anorganischen Stoffen und gegebenenfalls nachfolgender Zersetzung durch Temperaturbehandlung erfolgt.

5. Verfahren nach Anspruch 4, dadurch gekennzeichnet, dass die Abscheidung durch CVD-Verfahren erfolgt.

6. Verfahren nach Anspruch 4, dadurch gekennzeichnet, dass die Abscheidung aus einer übersättigten Lösung erfolgt.

7. Verfahren nach Anspruch 6, dadurch gekennzeichnet, dass der abgeschiedene Stoff ein Hydroxid oder Salz ist.

8. Verfahren nach Anspruch 6, dadurch gekennzeichnet, dass die übersättigte Lösung eine an Aluminium übersättigte Natronlauge ist.

9. Verfahren nach Anspruch 8, dadurch gekennzeichnet, dass der abgeschiedene Stoff Aluminiumhydroxid ist und dieses durch Temperaturbehandlung zu Aluminiumoxid umgesetzt wird.

10. Verfahren nach einem der Ansprüche 4 bis 9, dadurch gekennzeichnet, dass die Oberfläche der Schaumkeramik vor der Abscheidung angeätzt wird.

FIG. 1

FIG. 2

FIG. 3

2.4 1 Dieselmotor

Vollllastbedingung

FIG. 4

Europäisches
Patentamt

**EUROPÄISCHER RECHERCHENBERICHT**

Nummer der Anmeldung

EP 88 81 0839

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 517 847 (C.G.E.)<br>* Spalte 1, Zeilen 14-24 *<br>--- | 1,4,9 | C 04 B 38/00<br>C 04 B 41/87<br>F 01 M 3/02 |
| A | EP-A-0 193 701 (NIPPON DENSO)<br>* Seite 1, Zeilen 4-10; Ansprüche 2-5 *<br>--- | 1,4,5 | |
| A | GB-A-1 021 662 (MORGANITE R & D)<br>* Anspruch 1 *<br>--- | | |
| A | GB-A-2 097 777 (ROLLS-ROYCE)<br>* Anspruch 1 *<br>----- | | |

RECHERCHIERTE
SACHGEBIETE (Int. Cl.4)

C 04 B 38
C 04 B 41
F 01 M 3
B 01 D 39

Der vorliegende Recherchenbericht wurde für alle Patentansprüche erstellt

| Recherchenort | Abschlußdatum der Recherche | Prüfer |
|---|---|---|
| DEN HAAG | 24-02-1989 | DAELEMAN P.C.A. |